# EUROPEAN PATENT APPLICATION

(11) **EP 3 305 972 A1**
(43) Date of publication of application: **11.04.2018**
(21) Application number: 16799152.0
(22) Date of filing: 15.04.2016
(51) Int. Cl.: D06F 39/08, D06F 33/02

(54) **FLOCCULATING WASHING MACHINE AND CONTROL METHOD THEREOF**

(30) Priority: 27.05.2015 CN 201510277838
(71) Applicant: Qingdao Haier Washing Machine Co., Ltd., Qingdao, Shandong 266101 (CN)
(72) Inventor: LI, Dong, Qingdao Shandong 266101 (CN); CHE, Min, Qingdao Shandong 266101 (CN); LAO, Chunfeng, Qingdao Shandong 266101 (CN); DENG, Jinzhu, Qingdao Shandong 266101 (CN); ZHAO, Zhiqiang, Qingdao Shandong 266101 (CN)
(74) Representative: Beck & Rössig European Patent Attorneys
(86) International application number: PCT/CN2016/079406
(87) International publication number: WO 2016/188263

(57) **Abstract**

A flocculation washing machine comprises an outer barrel, a washing structure disposed inside the outer barrel and a circulating water treatment device disposed outside the outer barrel. The circulating water treatment device comprises a flocculation treatment unit for performing flocculation treatment on washing water; the flocculation treatment unit is communicated with the outer barrel through a filtering device, so that flocculation water after filtering treatment flows back to the outer barrel. And an overflow port is formed in the filtering device, and a flow sensor for detecting an overflow rate is arranged at the overflow port. A control method of the flocculation washing machine comprises: an overflow rate of the filtering device and/or a liquid level height in a flocculation container are detected in real time, and a blockage state of the filtering device is judged according to a relationship between a detection value and a preset value. The blockage state of the filtering device is determined by judging whether the overflow rate of the filtering device and/or a reduction rate of the liquid level height in the flocculation container is larger than a preset value, and the purpose of providing a basis for accurately judging whether a filter element of the filtering device needs to be cleaned or replaced is achieved.

## Description

### TECHNICAL FIELD

The present invention relates to the field of washing machines, particularly relates to a flocculation washing machine with a circulating water saving function, and further relates to a control method of the flocculation washing machine.

### BACKGROUND

With the improvement of people's living standards, washing machine has become one of major household appliances in people's daily life. A washing process of the washing machine mainly comprises several stages of washing, rinsing and dewatering. In the washing stage, water and a detergent are fed into the washing machine to wash clothes; and in the rinsing stage, in order to rinse out dirt and the residual detergent, more water is needed or more times of rinsing needs to be performed to rinse the clothes, so that a large amount of water is consumed. Even if a water-saving barrel washing machine is used, the clothes also need to be rinsed at least twice to get cleaned, and at least 30L or above of running water needs to be consumed in the process. Sometimes, dirt on the clothes is less or the use amount of the detergent is less, the clothes can be cleaned after being rinsed twice. But due to user selects three times of rinsing, waste of water will also be caused. For example, a 6Kg full-automatic washing machine generally consumes about 100 litres of water for rinsing twice. How to clean clothes thoroughly and save water and electricity at the same time is one of the focuses of consumers.

Therefore, the applicant has filed a Chinese patent application with the application number of 201310356428.5, which relates to a washing machine with a circulating water treatment function and a control method of the washing machine. The washing machine comprises an outer barrel, a washing structure arranged in the outer barrel and a flocculation water treatment device arranged under the outer barrel. The flocculation water treatment device comprises a flocculation treatment unit and a filtering unit, the flocculation treatment unit comprises a flocculation container communicating with the outer barrel, and a flocculant deliverer for delivering a flocculant into the flocculation container, and water is discharged from the outer barrel to the flocculation container for flocculation treatment. The filtering unit comprises a filtering container and a filtering screen arranged in the filtering container. The filtering container communicates with the flocculation container and the outer barrel, and water after flocculation treatment in the flocculation container is filtered and re-discharged into the outer barrel for reuse. In this patent application, the flocculation filtration-treated water is circulated until washing is finished, and the water is discharged into the circulating water treatment device for cleaning the flocculation treatment unit and the filtering unit, and then is drained. The flocculation washing machine provided by this patent application has the characteristics of saving water resource, reducing water pollution and protecting environment.

However, in a process that flocculation water is filtered by the filtering unit, a large amount of flocculates will be left on a filter element as time goes on which causes blockage of the filter element. So that the filtration efficiency is reduced, and even the filter element is complete blockage.

In view of this, the present invention is disclosed.

### SUMMARY

A technical problem to be solved in the present invention is to overcome the defects existing in the prior art and provide a flocculation washing machine so as to achieve the purpose of detecting a blockage state of a filtering device.

To solve the above technical problem, the basic concept of the technical solution adopted by the present invention is as follows:
a flocculation washing machine comprises an outer barrel, a washing structure disposed inside the outer barrel and a circulating water treatment device disposed outside the outer barrel. The circulating water treatment device comprises a flocculation treatment unit for performing flocculation treatment on washing water; the flocculation treatment unit is communicated with the outer barrel through a filtering device to make flocculation water after filtering treatment flows back to the outer barrel. And an overflow port is formed in the filtering device, and a flow sensor for detecting an overflow rate is arranged at the overflow port.

In some embodiment, the overflow port is communicated with a flocculation container through an overflow pipe equipped with a first flow sensor.

In some embodiment, the filtering device forms a filtering cavity, a filter element being detachable and replaceable is disposed in the filtering cavity, the filter element divides the filtering cavity into two independent parts. The first part is provided with a water inlet and the overflow port, the second part is provided with a water outlet. The water inlet is communicated with the flocculation container, and the water outlet is in communicated with the outer barrel. Flocculation water flowing into the first part of the filtering cavity through the water inlet is filtered by the filter element. Clean water after filtered flows into the second part of the filtering cavity and flows back into the outer barrel through the water outlet, and flocculates are left in the first part of the filtering cavity.

In some embodiment, a pressure limiting valve for controlling opening and closing of the overflow pipe is arranged at the overflow port of the filtering device, so that water in the overflow pipe only flows from the filtering device to the flocculation container.

In some embodiment, a second flow sensor for detecting an outlet flow rate is arranged at the water outlet of the filtering device; and/or a water level sensor for detecting water level height is disposed in the flocculation container.

Another object of the present invention is to provide a control method of any one of the above flocculation washing machines so as to achieve the purpose of judging the blockage state of the filtering device timely and accurately.

To achieve the above object, the basic concept of the technical solution adopted by the present invention is as follows:
a control method of the flocculation washing machine is comprising detecting an overflow rate of the filtering device and/or a liquid level height in the flocculation container in real time, and judging a blockage state of the filtering device according to a relationship between a detection value and a preset value.

In some embodiment, it is judged that the filtering device is in mild blockage when a detection value of the overflow rate of the filtering device is larger than 0 and smaller than a preset value V1, and an inflow rate of the filtering device is reduced; and it is judged that the filtering device is in severe blockage when a detection value of the overflow rate of the filtering device is larger than the preset value V1, and water intake of the filtering device is stopped.

In some embodiment, it is judged that the filtering device is in blockage when the detection value of the outflow rate of the filtering device is always smaller than a preset value V2 within a certain time t; and preferably, it is judged that the filtering device is in mild blockage.

In some embodiment, it is judged that the filtering device is in blockage when a reduction value of the liquid level height of flocculation water in the flocculation container is smaller than a preset value h within a certain time t; and preferably, it is judged that the filtering device is in severe blockage.

In some embodiment, a prompt signal for prompting that the filter element of the filtering device needs to be cleaned is generated when the filtering device is in mild blockage; and a prompt signal for prompting that the filter element of the filtering device needs to be replaced is generated when the filtering device is in severe blockage.

By adopting the above technical solution, the present invention has the following beneficial effects as compared with the prior art:
1. The blockage state of the filtering device is determined by detecting the overflow rate of the filtering device and judging whether the overflow rate is larger than the preset value, thereby providing a basis for accurately judging whether the filter element of the filtering device needs to be cleaned or replaced;
2. The inlet flow rate of the filtering device and/or a change rate of the water level in the flocculation container are detected, and the purpose of indirectly detecting the blockage state of the filtering device is achieved by judging an outlet flow rate of the filtering device or a change rate of the liquid level in the flocculation container; and meanwhile, detection manners are diversified, and the detection accuracy of the blockage state is improved;
3. The inlet flow rate is reasonably reduced or the water intake is stopped according to the blockage state, so that a situation that the filtering efficiency is influenced by an overlarge overflow rate is prevented. And meanwhile, the prompt signal for prompting that the filter element needs to be cleaned or replaced is correspondingly generated when mild blockage or severe blockage occurs, so as to guide user to make corresponding correct operations; 4. The flocculation washing machine provided by the present invention has a simple structure, the control method of the flocculation washing machine is simple and brief, the flocculation washing machine and the control method thereof have remarkable effects and are suitable for popularization and application.

### BRIEF DESCRIPTION OF THE DRAWINGS

Fig.1 is a schematic diagram of a washing machine according to an embodiment of the present invention;
Fig.2 is a schematic diagram of a filtering device according to an embodiment of the present invention;
Fig.3 is a schematic diagram of a filtering device according to another embodiment of the present invention; and
Fig. 4 is a schematic diagram of a washing machine according to another embodiment of the present invention.

### Main reference signs:

10-filtering device; 11-filtering cavity; 12-filter element; 13-water inlet; 14-water outlet; 15-overflow port; 16-first flow sensor; 17-pressure limiting valve; 18-overflow cavity; 19-second flow sensor; 20-flocculation container; 21-water level sensor; and 30-overflow pipe.

### DETAILED DESCRIPTION

Specific embodiments of the present invention are further described below in detail with reference to the accompanying drawings.

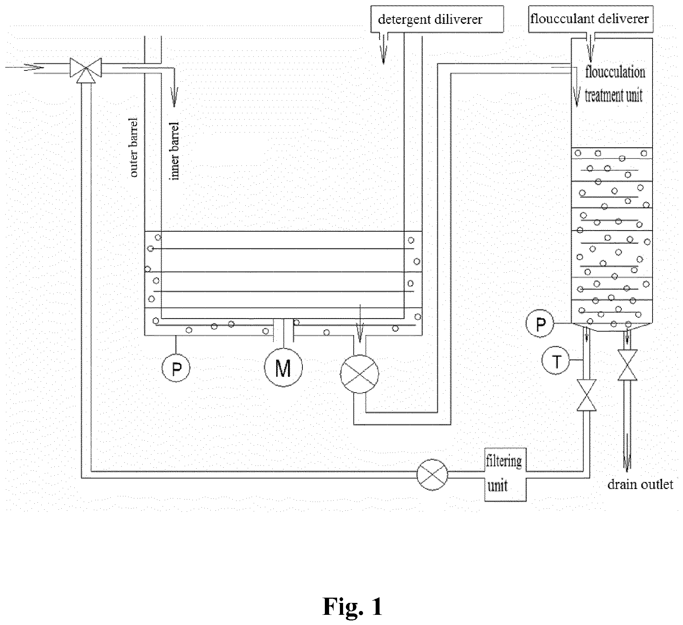

As shown in Fig. 1, a washing machine of the embodiment of the present invention is internally provided with a conventional washing machine structure and is also provided with a flocculation water treatment device. The washing machine structure comprises an outer barrel, an inner barrel disposed inside the outer barrel, a door body, a control panel, a water intake system and a washing motor, the bottom of the outer barrel is communicated with a casing frame through a damper, and an upper part of the outer barrel is communicated with a casing frame through a suspension spring. And the water intake system comprises a water intake structure and an automatic detergent delivering device. The outer barrel is a containing structure for containing washing water, and the inner barrel disposed inside the outer barrel is a washing structure. The outer barrel is communicated with the water intake structure.

In the embodiment of the present invention, the circulating water treatment device at least comprises a flocculation treatment unit. The flocculation treatment unit comprises a flocculation container communicated with the outer barrel and a flocculant deliverer by which a flocculant is delivered into the flocculation container, and water is drained from the outer barrel into the flocculation container for flocculation treatment.

The flocculation container is provided with a water inlet, a water return opening and a drain outlet. A water outlet of the outer barrel is communicated with the water inlet of the flocculation container through a pipe equipped with a first water pump. And the water return opening of the flocculation container is communicated with a water inlet of the outer barrel through a pipe equipped with a second water pump, thereby forming a controllable circulation loop of washing water between the outer barrel and the flocculation container. The drain outlet of the flocculation container is communicated with the external of the washing machine through a pipe equipped with a drainage valve for draining out sewage and flocculates after washing completed.

Preferably, the circulating water treatment device further comprises a filtering unit; the filtering unit performs filtering treatment on water after flocculation treatment in the flocculation treatment unit to separate flocculates from clean water. However, flocculates can also be separated from clean water without a filtering device, for example, a water level sensor is disposed in the flocculation container to ensure that the water level in the flocculation container always keeps a certain height, so that flocculates floating on the water surface in the flocculation container are always left in the flocculation container, and the purpose of removing flocculates in flocculation water is also achieved.

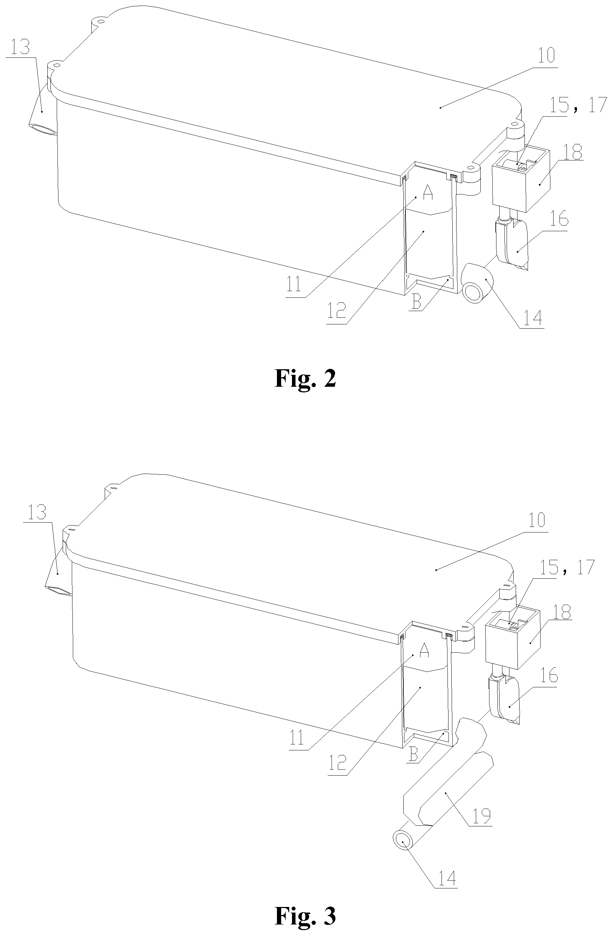

As shown in Fig. 2 and Fig. 3, in the embodiment of the present invention, the filtering unit comprises a filtering device 10, and the interior of the filtering device 10 is hollow to form a filtering cavity 11; preferably, the filtering cavity 11 is closed under stress. A filter element 12 being detachable and replaceable is disposed in the filtering cavity 11, the filter element 12 divides the filtering cavity into two parts. The first part A is provided with a water inlet 13 and an overflow port 15. The second part B is provided with a water outlet 14, and the water inlet 13 is communicated with the flocculation container 20, and the water outlet 14 is communicated with the outer barrel. Flocculation water flowing into the first part A of the filtering cavity through the water inlet 13 is subjected to filtering treatment by the filter element 12, clean water after filtered flows into the second part B and flows back to the outer barrel through the water outlet 14, and flocculates are left in the first part A of the filtering cavity 11.

Preferably, the filter element 12 is a piece of filter cotton, and the filter cotton is horizontally or vertically arranged in the filtering cavity for dividing t the filtering cavity 11 into two relatively independent parts. Certainly, in the embodiments of the present invention, the filter element can also be any one of the existing filter element structures with a flocculate filtering function, such as a filter screen, a filter membrane and the like.

In the embodiments of the present invention, a flow sensor 16 for detecting an overflow rate is arranged at the overflow port 15 of the filtering device, and/or a second flow sensor 19 for detecting an outlet flow rate is arranged at the water outlet 14 of the filtering device, and/or a water level sensor 21 for detecting a water level height in the flocculation container 20 is disposed in the flocculation container 20. Accurate judgment on the blockage state of the filtering device is achieved by comparing an overflow rate detection value, an outlet flow rate detection value and a water level height detection value with preset values.

### Embodiment 1

As shown in Fig. 2, in this embodiment, the overflow port 15 of the filtering device 10 is communicated with the flocculation container 20 through an overflow pipe 30, so that overflow water from the filtering device 10 flows back to the flocculation container 20 through the overflow pipe 30. A first flow sensor 16 for detecting the overflow rate is arranged on the overflow pipe 30.

In this embodiment, a detection value of the first flow sensor 16 is compared with a preset value V1 of the system, and there are the following cases:
Case 1, it is judged that the filtering device is not in blockage when the detection value of the overflow rate of the filtering device is equal to 0, and the filtering device works normally.
Case 2, it is judged that the filtering device is in mild blockage when the detection value of the overflow rate of the filtering device is larger than 0 and smaller than the preset value V1, and an inlet flow rate of the filtering device is reduced, and a prompt signal for prompting that the filter element of the filtering device needs to be cleaned is generated. Case 3, it is judged that the filtering device is in severe blockage when the detection value of the overflow rate of the filtering device is larger than the preset value V1, and water intake of the filtering device is stopped, and a prompt signal for prompting that the filter element of the filtering device needs to be replaced is generated.

By means of the above devices and method, the accurate judgment of the blockage state of the filtering device is achieved by comparing an overflow rate detection value with the preset value; and meanwhile, the inlet flow rate is reasonably reduced or the water intake is stopped according to the blockage state, so that a situation that the filtering efficiency is influenced by an overlarge overflow rate is prevented.

As shown in Fig. 2, in this embodiment, a pressure limiting valve 17 for controlling opening and closing of the overflow pipe is arranged at the overflow port 15 of the filtering device 10. The pressure limiting valve 17 is closed in a normal state; and the pressure limiting valve 17 is opened when the filtering cavity 11 accumulates too much water which results in that the water pressure increases and exceeds a limiting value of the pressure limiting valve 17. Therefore, water flow in the overflow pipe 30 can only flow from the filtering device 10 to the flocculation container 20, thereby preventing backflow of overflow water caused by direction change of the water flow in the overflow pipe 30.

As shown in Fig. 2, in this embodiment, the overflow port 15 of the filtering device 10 is communicated with the overflow pipe 30 through the overflow cavity 18. The overflow cavity 18 is located on the outer side wall of the filtering device 10 and is opened. The overflow cavity is arranged on the overflow pipe to provide pressure stabilizing and flow rate reducing functions, thereby reducing the flow rate of overflow water, and preventing a situation that overflow water flows into the flocculation container and causes excessive shock to flocculates floating on the water surface, which makes the flocculates scattered.

In this embodiment, the preset value V1 is related to an inlet flow rate V from the flocculation container to the filtering device, and the value of V1/V is between 0.1-0.9. By setting the preset value V1, the inlet flow rate of the filtering device is reduced when the overflow rate is relatively smaller, so that filter treatment of flocculating water can be achieved without affecting the progress of flocculation; and meanwhile, the water intake is stopped when the overflow rate is overlarge, so as to avoid the occurrence of the washing machine always in flocculation filtration program.

### Embodiment 2

As shown in Fig. 3, in this embodiment, a second flow sensor 19 for detecting an outlet flow rate is arranged at the water outlet 14 of the filtering device 10.

In this embodiment, a detection value of the second flow sensor 19 is compared with a preset value V2 of the system, and there are the following cases:
Case 11, it is judged that the filtering device is not in blockage when the detection value of the outlet flow rate of the filtering device is larger than the preset value V2, and the filtering device works normally.
Case 12, it is judged that the filtering device is in blockage when the detection value of the outlet flow rate of the filtering is always smaller than the preset value V2 within a certain time t.

Preferably, in this embodiment, in case 12, it is judged that the filtering device is in mild blockage, the inlet flow rate of the filtering device is reduced, and a prompt signal for prompting that the filter element of the filtering device needs to be cleaned is generated.

The second flow sensor is additionally arranged at the water outlet of the filtering device so as to achieve the accurate judgment of the blockage degree of the filter element by utilizing the detection value of the outlet flow rate; and meanwhile, the first flow sensor and the second flow sensor are separately used to perform detection and judgment, thereby achieving diversification of blockage judgment and achieving the purpose of improving the accuracy of the blockage judgment.

In this embodiment, the preset value V2 is related to the inlet flow rate V from the flocculation container to the filtering device, wherein V2=V-V1, so that the value of V2/V is between 0.9-0.1.

### Embodiment 3

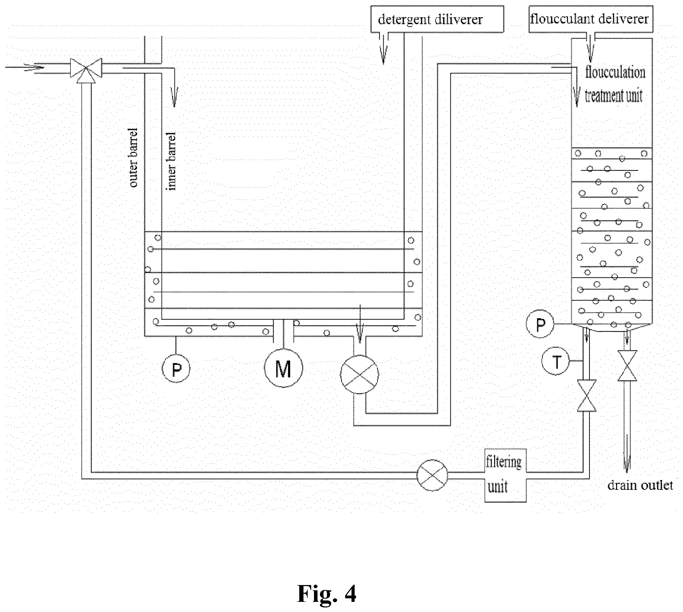

As shown in Fig. 1 and Fig. 4, in this embodiment, a water level sensor 21 for detecting a water level height in the flocculation container 20 is disposed in the flocculation container 20.

In this embodiment, a detection value of the water level sensor 21 is compared with a preset value h of the system, and there are the following cases:
Case 21, it is judged that the filtering device is not in blockage when the detection value of the outlet flow rate of the filtering device is larger than the preset value V2, and the filtering device works normally; and
Case 22, it is judged that the filtering device is in blockage when a reduction value of the water level height of flocculation water in the flocculation container is smaller than the preset value h within a certain time t.

Preferably, in this embodiment, in case 22, it is judged that the filtering device is in severe blockage, the water intake of the filtering device is stopped, and a prompt signal for prompting that the filter element of the filtering device needs to be replaced is generated.

By setting up the water level sensor in the flocculation barrel, flocculation container the accurate judgment of the blockage degree of the filter element is indirectly achieved by utilizing the detection value of the water level height in the flocculation container; and meanwhile, the water level sensor can be independently used, and the water level sensor also can be used together with the first flow sensor and/or the second flow sensor to perform judgment by utilizing a plurality of detection parameters, thereby achieving diversification of blockage judgment and achieving the purpose of improving the accuracy of the blockage judgment.

The implementation solutions in the above embodiments can be further combined or replaced, the embodiments are only for describing preferred embodiments of the present invention and are not intended to limit the concept and scope of the present invention, without departing from the design concept of the present invention, various changes and modifications made by those skilled in the art to the technical solutions shall all be covered within the scope of the present invention.

## Claims

1. A flocculation washing machine, comprising an outer barrel, a washing structure disposed inside the outer barrel and a circulating water treatment device disposed outside the outer barrel,
the circulating water treatment device comprising a flocculation treatment unit for performing flocculation treatment on washing water, and the flocculation treatment unit being communicated with the outer barrel through a filtering device to make flocculation water after filtering treatment flow back to the outer barrel; wherein
an overflow port is formed in the filtering device, and a flow sensor for detecting an overflow rate is arranged at the overflow port.

2. The washing machine according to claim 1, **characterized in that** the overflow port is communicated with a flocculation container through an overflow pipe equipped with a first flow sensor.

3. The washing machine according to claim 1 or 2, **characterized in that** the filtering device forms a filtering cavity, a filter element being detachable and replaceable is disposed in the filtering cavity, and the filter element divides the filtering cavity into two independent parts.

4. The washing machine according to claim 2, **characterized in that** a pressure limiting valve for controlling opening and closing of the overflow pipe is arranged at the overflow port of the filtering device, and water in the overflow pipe only flows from the filtering device to the flocculation container.

5. The washing machine according to claim 3, **characterized in that** a second flow sensor for detecting an outlet flow rate is arranged at a water outlet of the filtering device;
and/or a water level sensor for detecting water level height is disposed in the flocculation container.

6. A control method of the flocculation washing machine, comprising:
detecting an overflow rate of the filtering device and/or a liquid level height in the flocculation container in real time, and judging a blockage state of the filtering device according to a relationship between a detection value and a preset value.

7. The control method according to claim 6, **characterized in that** it is judged that the filtering device is in mild blockage when a detection value of the overflow rate of the filtering device is larger than 0 and smaller than a preset value V1, and an inlet flow rate of the filtering device is reduced; and
it is judged that the filtering device is in severe blockage when the detection value of the overflow rate of the filtering device is larger than the preset value V1, and water intake of the filtering device is stopped.

8. The control method according to claim 7, **characterized in that** it is judged that the filtering device is in blockage when the detection value of the outflow rate of the filtering device is always smaller than a preset value V2 within a certain time t.

9. The control method according to claim 7, **characterized in that** it is judged that the filtering device is in blockage when a reduction value of the liquid level height of flocculation water in the flocculation container is smaller than a preset value h within a certain time t.

10. The control method according to any one of claims 7 to 9, **characterized in that** a prompt signal for prompting that the filter element of the filtering device needs to be cleaned is generated when the filtering device is in mild blockage; and
a prompt signal for prompting that the filter element of the filtering device needs to be replaced is generated when the filtering device is in severe blockage.
